# FASCICULE DE BREVET EUROPEEN

(11) **EP 0 806 628 B1**
(45) Date de publication et mention de la délivrance du brevet: **28.06.2000**
(21) Numéro de dépôt: 97400986.2
(22) Date de dépôt: 30.04.1997
(51) Int. Cl.: G01B 5/004

(54) **Dispositif de repérage d'un point et utilisation de ce dispositif pour le repérage de points d'un objet symétrique**
Punktortungsvorrichtung und Anwendung dieser Vorrichtung zur Ortung eines Punktes eines symmetrischen Objektes
Point locating device and use of this device for locating points of a symmetrical object

(30) Priorité: 06.05.1996 FR 9605639
(43) Date de publication de la demande: 12.11.1997
(73) Titulaire: AUTOMOBILES PEUGEOT, 75116 Paris (FR); AUTOMOBILES CITROEN, 92200 Neuilly-sur-Seine (FR); Riga, Alessandro, 75015 Paris (FR)
(72) Inventeur: Riga, Alessandro, 75015 Paris (FR)
(74) Mandataire: Moncheny, Michel

(56) Documents cités:
- GB-A- 912 368
- GB-A- 1 498 009
- JP-A- 61 118 601
- US-A- 2 594 457
- US-A- 3 100 346

## Description

La présente invention concerne un dispositif de repérage d'un point et une utilisation de ce dispositif pour le repérage de points d'un objet symétrique.

On connaît déjà dans l'état de la technique un dispositif de repérage d'un point par rapport à un repère cartésien de référence défini par un axe horizontal d'abscisses, un axe horizontal d'ordonnées et un axe vertical de cotes, le dispositif étant du type comprenant un organe de repérage du point relié à un support de positionnement en abscisse et cote de cet organe de repérage.

Un dispositif de ce type est utilisé notamment pour l'élaboration d'une maquette d'un objet destiné à être fabriqué industriellement.

La maquette est réalisée par sculpture d'un bloc de matière brute malléable. Le contour de la maquette est formé à partir d'un plan coté.

Les coordonnées des points du contour sont mesurées sur le plan puis reportées sur le bloc à sculpter, au moyen du dispositif de repérage, de la façon suivante.

Le support du dispositif de repérage est placé sur une surface quadrillée permettant le positionnement d'un point en ordonnée, le support permettant le positionnement de ce point en abscisse et cote.

Une extrémité libre de l'organe de repérage, matérialisant le point à repérer, est enduite d'un produit de marquage. Cette extrémité libre est enfoncée dans le bloc à sculpter, à l'endroit repéré par le dispositif.

Le produit de marquage est transféré par contact dans la matière à sculpter de manière à y laisser une marque correspondant au point repéré. Le contour de la maquette est ensuite mis en forme au niveau de ce point.

Pour repérer les points du contour d'une maquette comprenant deux moitiés symétriques par rapport à un plan parallèle aux axes des abscisses et des cotes, il faut, dans un premier temps, positionner le dispositif de repérage sur la surface quadrillée pour repérer les points du contour d'une première moitié, puis, dans un deuxième temps, déplacer le dispositif de repérage sur la surface quadrillée pour repérer les points du contour de la seconde moitié, symétrique de la première.

Les repérages des points d'une maquette symétrique sont donc longs à réaliser et peu précis du fait des déplacements du dispositif de réparage.

Par conséquent, afin de gagner du temps au cours de la réalisation d'une maquette symétrique, on détermine généralement un nombre réduit de points symétriques de la maquette, ce qui peut conduire à des défauts de symétrie de cette dernière.

L'invention a pour but de remédier aux inconvénients exposés ci-dessus et de proposer un dispositif simple adapté au repérage de points d'un objet symétrique.

A cet effet, l'invention a pour objet un dispositif de repérage d'un point, du type précité, **caractérisé en ce que** l'organe de repérage est porté par un bras rectiligne de positionnement en ordonnée de cet organe de repérage, ce bras étant muni d'une extrémité de liaison montée pivotante sur le support autour d'un axe d'articulation parallèle à celui des abscisses, entre deux positions symétriques par rapport à cet axe d'articulation dans lesquelles l'axe du bras est parallèle à l'axe des ordonnées.

Suivant des caractéristiques de différents modes de réalisation de ce dispositif de repérage :
- les deux positions symétriques du bras sont établies par des moyens à appui ou à indexation permettant une libre rotation du bras autour de l'axe d'articulation entre ses positions symétriques ;
- le support comporte deux montants verticaux réglables en hauteur, d'axes parallèles à l'axe des cotes, l'extrémité supérieure des montants portant une traverse horizontale ayant pour axe l'axe d'articulation, l'extrémité de liaison du bras étant montée, d'une part, pivotante sur la traverse entre les deux positions symétriques du bras, et d'autre part, déplaçable le long de cette traverse ;
- les montants sont portés par une table, l'extrémité inférieure d'au moins un montant étant emboîtée dans l'un des orifices d'une série d'orifices ménagés dans la table et alignés parallèlement à l'axe des abscisses, de manière à permettre le réglage de l'écartement des montants;
- les deux positions symétriques du bras sont établies par deux faces horizontales formant des butées fixes portées par le support, symétriques par rapport à un plan vertical contenant l'axe d'articulation du bras, coopérant respectivement avec deux faces complémentaires formant des butées mobiles portées par le bras, symétriques par rapport à un plan contenant les axes du bras et d'articulation de ce bras, les butées mobiles prenant appui par gravité sur les butées fixes qui s'étendent sous un plan horizontal contenant l'axe d'articulation du bras;
- l'extrémité de liaison du bras forme un moyeu de contour circulaire centré sur l'axe d'articulation du bras et partiellement logé dans un berceau de contour complémentaire, porté par le support, les extrémités du berceau formant les butées fixes de positionnement du bras;
- les butées mobiles de positionnement du bras forment des faces d'une partie du bras intermédiaire entre l'extrémité de liaison et le reste du bras ;
- les butées mobiles de positionnement du bras forment des faces d'une saillie radiale du moyeu, dirigée vers l'extrémité libre du bras et décalée par rapport à cette extrémité libre parallèlement à l'axe d'articulation du bras ;
- le centre de gravité du bras est situé plus près de son extrémité de liaison que de son extrémité libre ;
- l'organe de repérage est porté par une tête montée déplaçable sur le bras parallèlement à l'axe de ce bras ;
- la tête, de préférence amovible, forme un élément creux femelle, tel qu'un manchon ou une bague, qui est coaxial au bras et qui est monté coulissant sur ce bras formant un élément mâle ;
- l'organe de repérage a pour plan de symétrie un plan contenant les axes du bras et d'articulation de ce bras ;
- l'organe de repérage forme un doigt dissymétrique par rapport à l'axe du bras, s'étendant perpendiculairement à ce bras, ce doigt étant monté pivotant sur le bras autour de l'axe de ce dernier, entre deux positions symétriques par rapport à l'axe du bras ;
- la tête est montée rotative autour du bras ;
- les deux positions symétriques de l'organe de repérage sont établies par des moyens à appui ou à indexation permettant une libre rotation de l'organe de repérage autour de l'axe du bras entre les deux positions symétriques de cet organe ;
- les deux positions symétriques de l'organe de repérage sont établies par des moyens d'indexation, ménagés sur les surfaces en regard du bras et de la tête, comprenant deux encoches diamétralement opposées ménagées dans le bras et un ergot ménagé dans la tête destiné à s'emboîter alternativement dans l'une ou l'autre des encoches, un manchon intermédiaire déformable radialement élastiquement, par exemple en caoutchouc, étant interposé entre les surfaces en regard du bras et de la tête afin de permettre des déplacements radiaux relatifs du bras et de la tête pour le déboîtement et l'emboîtement de l'ergot dans les encoches ;
- les moyens d'indexation comprennent au moins deux séries d'encoches diamétralement opposées ménagées dans le bras, les encoches d'une même série étant alignées parallèlement à l'axe du bras et étant destinées à coopérer avec l'ergot de la tête pour positionner l'organe de repérage en ordonnée ;
- le dispositif comprend un secteur fixe en quart de disque solidaire du bras destiné à coopérer avec un secteur mobile en quart de disque, solidaire de l'organe de repérage, ce secteur étant délimité par des bords radiaux concourant vers l'axe du bras, et les deux positions symétriques de l'organe de repérage sont établies respectivement par mise en appui de deux premiers et deux seconds bords complémentaires des secteurs fixe et mobile, les bords radiaux complémentaires en appui l'un contre l'autre étant immobilisés entre eux par des moyens complémentaires à encoches et ergots ménagés dans ces bords ;
- l'organe de repérage comprend une extrémité coudée en forme générale de crochet ayant pour plan de symétrie un plan perpendiculaire à l'axe du bras, cette extrémité de l'organe de repérage étant montée pivotante sur le reste de cet organe autour d'un axe perpendiculaire à l'axe du bras entre deux positions symétriques par rapport au plan contenant l'axe du bras et l'axe d'articulation de l'extrémité coudée de l'organe de repérage;
- l'organe de repérage comprend une extrémité en forme générale d'ancre munie de branches symétriques sensiblement parallèles à un plan perpendiculaire à l'axe des abscisses;

L'invention a également pour objet l'utilisation d'un dispositif de repérage tel que défini ci-dessus pour le repérage de points d'un objet symétrique par rapport à un plan vertical parallèle aux axes des abscisses et des cotes.

L'invention sera mieux comprise à la lecture de la description qui va suivre donnée uniquement à titre d'exemple et faite en se référant aux dessins annexés dans lesquels :
- la figure 1 est une vue en perspective d'un dispositif de repérage selon un premier mode de réalisation de l'invention ;
- la figure 2 est une vue de détail, à échelle agrandie, du bras du dispositif représenté à la figure 1;
- la figure 3 est une vue en coupe à échelle agrandie suivant la ligne 3-3 de la figure 2, montrant notamment des moyens de positionnement de l'organe de repérage d'un point ;
- la figure 4 est une vue similaire à la figure 3 montrant une variante de réalisation des moyens de positionnement de l'organe de repérage d'un point ;
- les figures 5 à 7 sont des vues similaires à la figure 1 montrant le bras du dispositif de repérage respectivement dans trois positions différentes ;
- la figure 8 est une vue en plan d'une première variante de réalisation du bras du dispositif de repérage selon l'invention ;
- la figure 9 est une vue de détail en perspective de l'organe de repérage d'un point du bras représenté à la figure 8 ;
- la figure 10 est une vue en perspective d'une seconde variante du bras du dispositif de repérage selon l'invention ;
- la figure 11 est une vue en perspective d'une troisième variante du bras du dispositif de repérage selon l'invention ;
- la figure 12 est une vue suivant la flèche 12 de la figure 11;
- la figure 13 est une vue en perspective d'un dispositif de repérage selon un second mode de réalisation de l'invention.

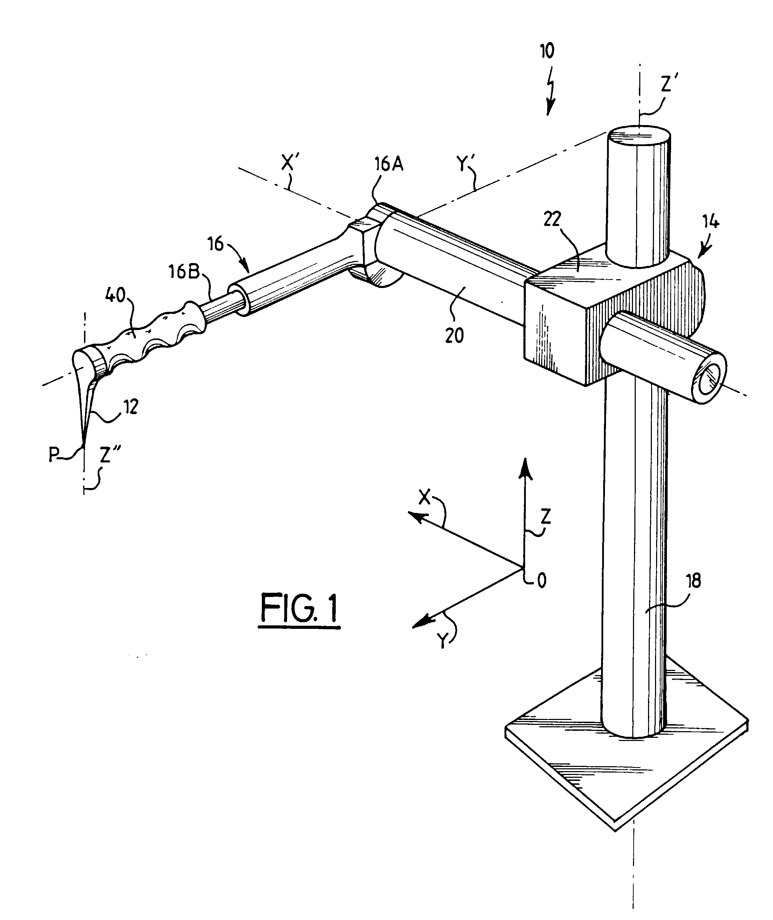

On a représenté sur la figure 1 un dispositif 10, selon un premier mode de réalisation de l'invention, pour le repérage d'un point P par rapport à un repère cartésien de référence défini par une origine O, un axe horizontal d'abscisses X, un axe horizontal d'ordonnées Y et un axe vertical de cotes Z.

Le dispositif 10 comprend un organe 12 de repérage du point P, un support 14 de positionnement en abscisse et cote de cet organe de repérage 12, et un bras rectiligne 16, d'axe Y', de positionnement en ordonnée de l'organe de repérage 12.

Le support 14, de type classique, a une forme générale de potence et comporte un montant vertical 18 d'axe Z' parallèle à l'axe des cotes, et une traverse horizontale 20 d'axe X' parallèle à l'axe des abscisses X.

La traverse 20 est reliée au montant 14 à l'aide de moyens 22 classiques, formant articulation, permettant un déplacement de cette traverse 20 par rapport au montant 18.

Une première extrémité de liaison 16A du bras est reliée à une extrémité libre de la traverse 20 et une seconde extrémité libre 16B du bras porte l'organe de repérage 12.

L'extrémité de liaison 16A du bras est montée pivotante sur l'extrémité libre de la traverse 20 autour de l'axe X' formant axe d'articulation.

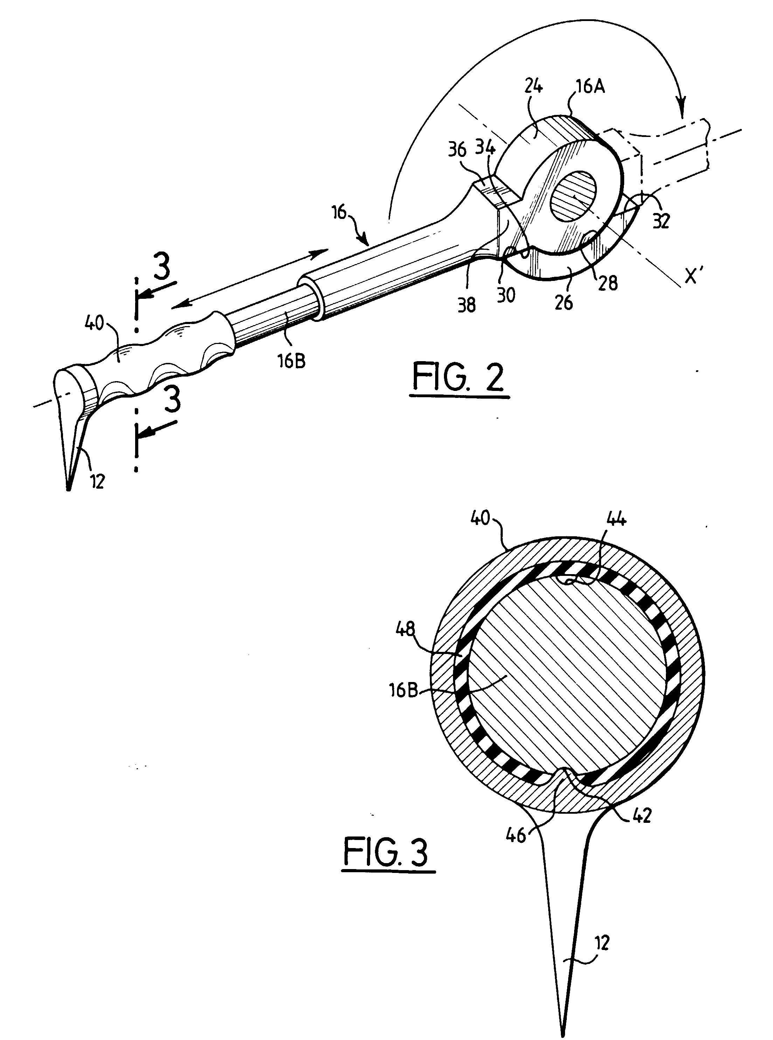

Le bras 16 est déplaçable entre deux positions symétriques par rapport à l'axe X', représentées respectivement en traits plein et mixte sur la figure 2, dans lesquelles l'axe Y' du bras est horizontal et parallèle à l'axe Y des ordonnées.

On comprend donc que l'on passe de l'une des positions symétriques du bras 16 à l'autre par pivotement de 180° de ce bras autour de l'axe X'.

En se référant en particulier à la figure 2, on voit que l'extrémité de liaison 16A du bras forme un moyeu de contour circulaire 24 centré sur l'axe d'articulation X'. Ce moyeu est partiellement logé dans un berceau 26 de contour 28 complémentaire du contour 24.

Le berceau 26 est fixé sur l'extrémité libre de la traverse 20. Les extrémités de ce berceau sont délimitées par des faces horizontales formant des butées fixes 30,32 permettant d'établir les deux positions symétriques horizontales du bras 16.

On notera que les butées fixes 30,32 s'étendent sous un plan horizontal contenant l'axe X' d'articulation du bras.

On notera également que les butées fixes 30,32 sont symétriques par rapport à un plan vertical contenant l'axe X' d'articulation du bras.

Les butées fixes 30,32 sont destinées à coopérer respectivement avec deux faces complémentaires ménagées sur le bras 16, formant des butées mobiles 34,36 de positionnement de ce bras.

Ces butées mobiles 34,36 forment des faces d'une partie 38 du bras, de section transversale sensiblement parallélépipédique, intermédiaire entre l'extrémité de liaison 16A du bras et le reste de ce bras.

On notera que les butées mobiles 34,36 sont symétriques par rapport à un plan contenant les axes du bras Y' et d'articulation X' de ce bras.

Le bras 16 est maintenu dans l'une ou l'autre de ses deux positions symétriques sous l'effet de son propre poids, les butées mobiles 34,36 du bras prenant appui par gravité sur les butées fixes correspondantes 30,32 du support.

Afin de faciliter le pivotement du bras 16 autour de l'axe X', le centre de gravité de ce bras est, de préférence, situé plus près de son extrémité d'articulation 16A que de son extrémité libre 16B.

L'organe de repérage 12 est porté par une tête 40 montée déplaçable parallèlement à l'axe Y' du bras sur l'extrémité libre 16B de ce bras.

De préférence, la tête 40 est amovible et forme un élément creux femelle, tel qu'un manchon, qui est coaxial au bras 16 et qui est monté coulissant sur l'extrémité libre 16B du bras formant un élément mâle.

La surface externe de la tête 40 est munie de reliefs facilitant sa préhension et sa manoeuvre.

Dans l'exemple illustré aux figures 1 à 7, l'organe de repérage 12 forme un doigt rectiligne pointu, perpendiculaire au bras 16, s'effilant en s'écartant de ce bras, et la tête 40 est montée rotative autour de l'axe Y' du bras.

Le doigt 12, qui est dissymétrique par rapport à l'axe Y' du bras, s'étend verticalement lorsque ce bras est dans ses positions symétriques horizontales .

Le doigt 12 peut pivoter, conjointement avec la tête 40 autour de l'axe Y' du bras, entre deux positions symétriques par rapport à cet axe Y'.

Les deux positions symétriques du doigt 12 sont établies, par exemple, par des moyens d'indexation ménagés sur les surfaces en regard de l'extrémité libre 16B du bras et de la tête 40, comme cela est représenté sur la figure 3.

Ces moyens d'indexation comprennent deux encoches 42,44 diamétralement opposées ménagées dans l'extrémité libre 16B du bras et un ergot 46 ménagé dans la tête 40 destiné à s'emboîter alternativement dans l'une ou l'autre des encoches 42,44.

Un manchon intermédiaire 48, déformable radialement élastiquement, par exemple en caoutchouc, est interposé entre les surfaces en regard de l'extrémité libre 16B du bras et de la tête 40 afin de permettre des déplacements radiaux relatifs du bras et de la tête pour permettre, d'une part, le déboîtement et l'emboîtement de l'ergot 46 dans l'encoche 42,44 correspondante, et d'autre part, la rotation de la tête 40 autour de l'extrémité libre 16B du bras.

On comprend donc que le doigt 12 est déplaçable entre ses deux positions symétriques par rotation de 180° autour de l'axe Y' du bras.

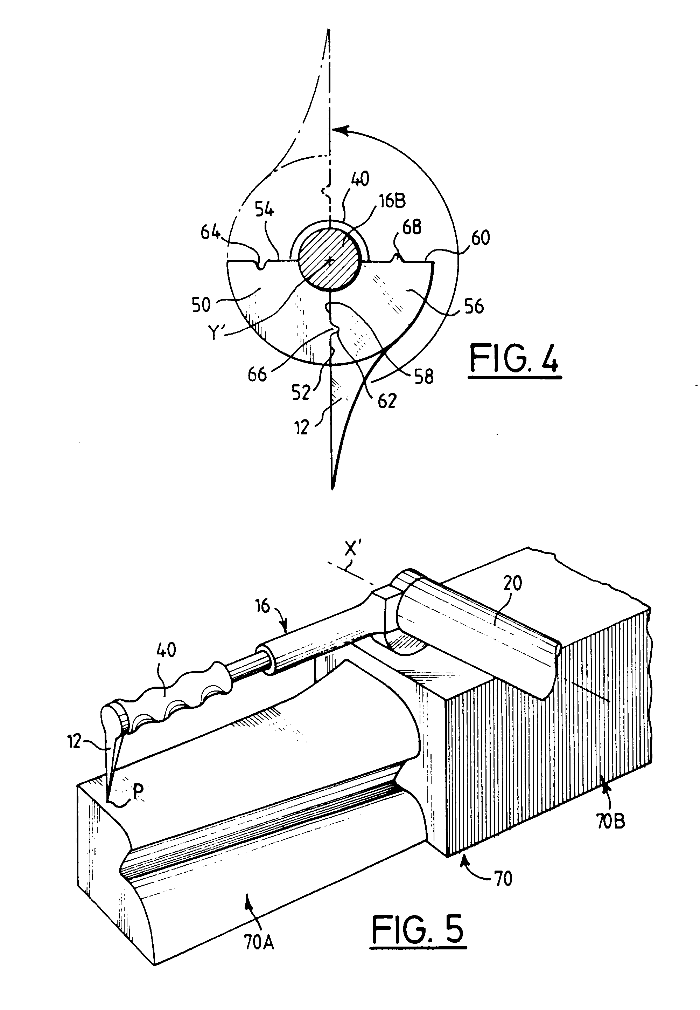

Sur la figure 4, on a représenté une variante de réalisation des moyens permettant d'établir les deux positions symétriques du doigt 12.

Dans ce cas, un secteur fixe 50 en quart de disque, délimité par deux bords radiaux 52,54 concourant vers l'axe Y' du bras, est solidaire de l'extrémité libre 16B de ce bras.

Lorsque le bras 16 est horizontal, les bords radiaux 52,54 sont respectivement vertical et horizontal.

Le secteur fixe 50 est destiné à coopérer avec un secteur mobile 56 en quart de disque, délimité par deux bords radiaux 58,60 concourant vers l'axe Y' du bras 16, solidaire du doigt 12.

Les deux positions symétriques du doigt 12 sont établies respectivement par mise en appui de deux premiers 52,58 et de deux seconds 54,60 bords complémentaires des secteurs fixe 50 et mobile 56.

Les bords radiaux complémentaires en appui l'un contre l'autre sont immobilisés entre eux par des moyens complémentaires à encoches 62,64 et ergots 66,68 ménagés dans ces bords.

On décrira ci-dessous, en se référant aux figures 5 à 7, l'utilisation du dispositif 10 selon le premier mode de réalisation de l'invention pour le repérage de points du contour d'un objet 70 tel qu'une maquette. L'objet 70 est symétrique par rapport à un plan vertical parallèle aux axes des abscisses X et des cotes Z.

On notera que sur les figures 5 à 7, l'objet 70 est représenté en cours de réalisation.

Une première moitié 70A de l'objet (à gauche sur les figures) est déjà mise en forme alors que la seconde moitié symétrique 70B de l'objet (à droite sur les figures) ne l'est pas encore et présente l'aspect d'un bloc brut en matière malléable classique.

Le dispositif 10 est positionné par rapport au repère de référence de manière que l'axe X' d'articulation du bras 16 soit contenu dans le plan de symétrie de l'objet 70.

Sur la figure 5, on a représenté le doigt 12 du dispositif de repérage au contact d'un point P de la première moitié 70A de l'objet. Ce point P est ainsi repéré par le dispositif 10.

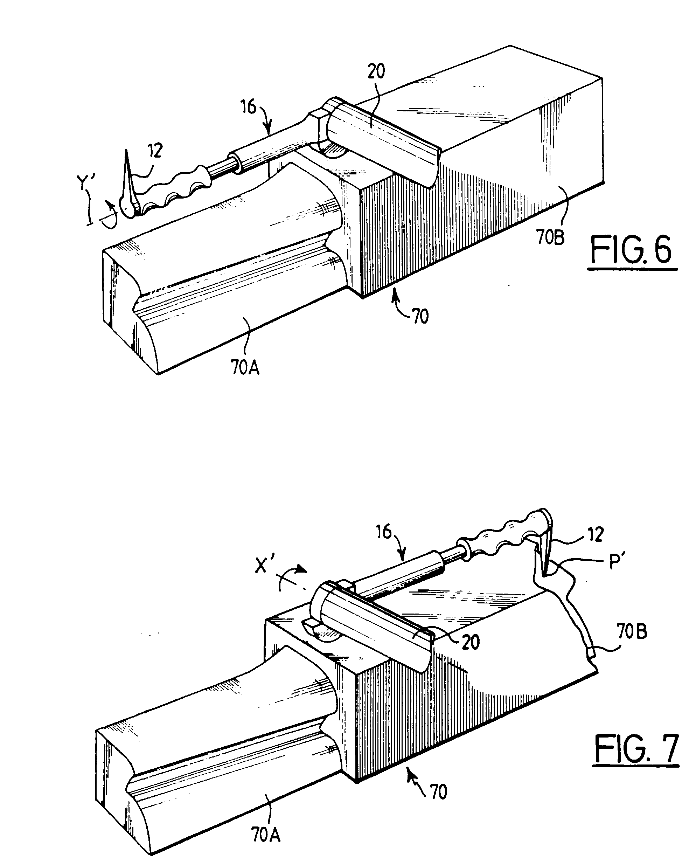

Pour déterminer le point P', symétrique du point P, situé dans la seconde moitié 70B de l'objet, on fait pivoter le doigt 12 autour de l'axe Y' du bras de 180°, comme cela est représenté sur la figure 6.

Puis on déplace le bras 16 de sa première position jusqu'à sa seconde position symétrique par pivotement de 180° autour de l'axe X' de la traverse, comme cela est représenté sur la figure 7.

Bien entendu, les pivotements du doigt 12 et du bras 16 peuvent être effectués dans un ordre quelconque.

On comprend donc qu'après avoir repéré un point P dans la première moitié 70A de l'objet, il est possible de repérer, avec précision et sans avoir à déplacer ce dispositif, le point P' symétrique du précédent situé dans la seconde moitié 70B de l'objet.

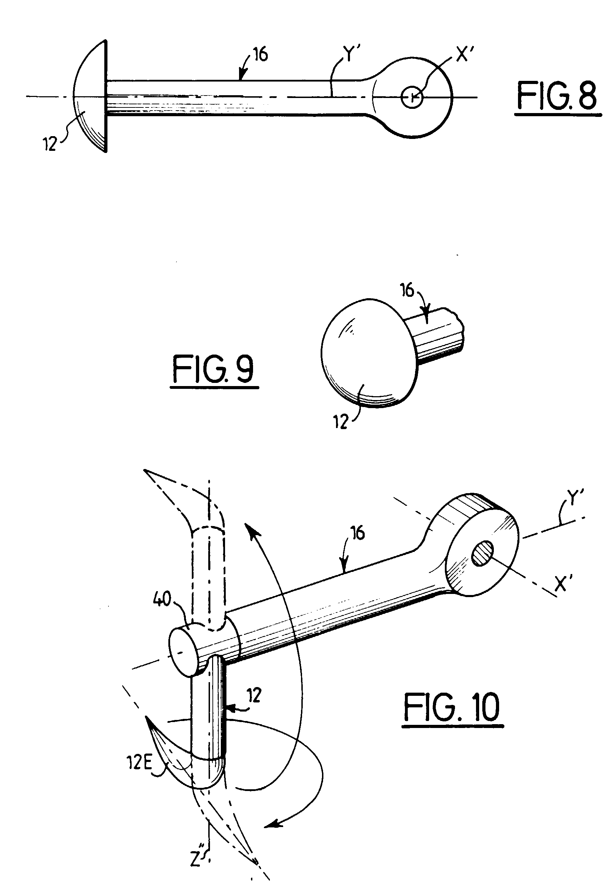

On décrira ci-dessous des variantes de réalisation du bras 16 illustrées sur les figures 8 à 12.

Sur ces figures, les éléments analogues à ceux des figures précédentes sont désignés par des références identiques.

Sur les figures 8 et 9, on a représenté une première variante de réalisation du bras 16.

Dans ce cas, l'organe de repérage 12 a pour plan de symétrie un plan contenant les axes du bras Y' et d'articulation X' de ce bras.

Par conséquent, il n'est pas nécessaire de faire tourner l'organe de repérage 12 autour de l'axe Y' du bras lors du déplacement de ce bras entre deux points symétriques.

L'organe de repérage 12 a par exemple une forme générale en segment de sphère comme cela est illustré sur les figures 8 et 9.

Sur la figure 10, on a représenté une seconde variante de réalisation du bras 16.

Dans ce cas, le doigt 12 comprend une extrémité coudée 12E, en forme générale de crochet, ayant pour plan de symétrie un plan perpendiculaire à l'axe Y' du bras.

La forme en crochet du doigt permet le repérage de points situés dans un enfoncement ou un creux du contour de l'objet 70.

L'extrémité 12E du doigt est montée pivotante sur le reste du doigt autour d'un axe Z'' perpendiculaire à l'axe Y' du bras, entre deux positions symétriques par rapport à un plan contenant l'axe Y' du bras et l'axe Z'' d'articulation de l'extrémité coudée 12E.

On comprend donc, que l'extrémité coudée 12E est déplaçable entre deux positions symétriques par rotation de 180° autour de l'axe Z''.

Dans cette seconde variante du bras, le repérage par le dispositif 10 d'un second point à partir d'un premier point symétrique se fait en enchaînant, dans un ordre quelconque, le pivotement de 180° de l'extrémité coudée 12E du doigt autour de l'axe Z'', le pivotement de 180° du doigt 12 autour de l'axe Y' et le pivotement de 180° du bras 16 autour de l'axe X'.

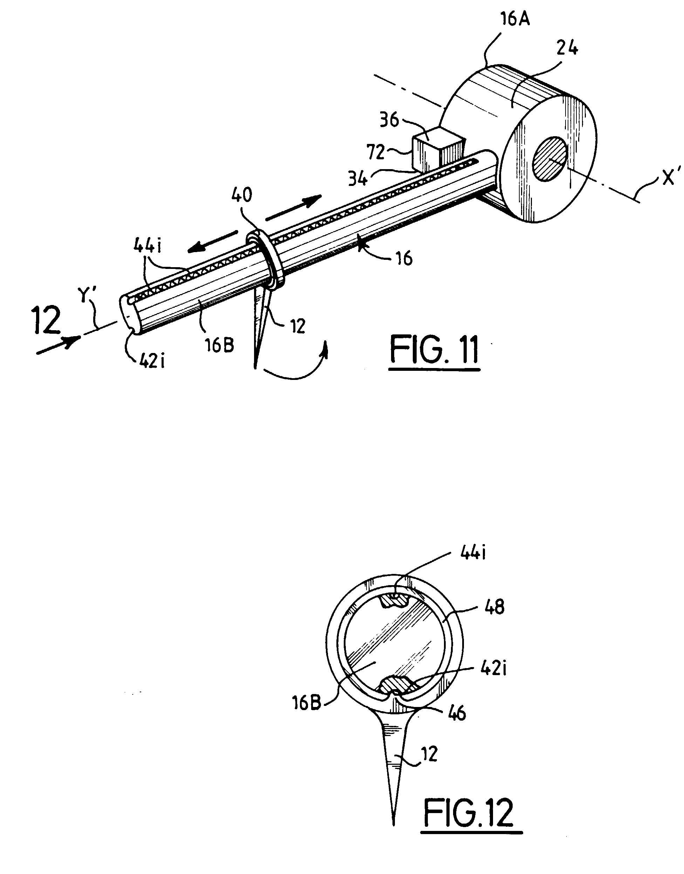

Sur les figures 11 et 12, on a représenté une troisième variante de réalisation du bras 16.

Dans ce cas, la tête 40 forme une bague coaxiale au bras 16, déplaçable en rotation et en translation sur ce bras.

Les deux positions symétriques du doigt 12 sont établies par des moyens d'indexation analogues à ceux représentés sur la figure 3. Toutefois, dans ce cas, les moyens d'indexation comprennent au moins deux séries d'encoches 42i,44i diamétralement opposées ménagées dans le bras 16.

Les encoches 42i,44i d'une même série sont alignées parallèlement à l'axe Y' du bras et sont destinées à coopérer avec l'ergot 46 de la tête 40 pour positionner l'organe de repérage 12 en ordonnée.

Par ailleurs, les butées mobiles 34,36 de positionnement du bras 16 forment des faces d'une saillie radiale 72 du moyeu.

Cette saillie 72 a une forme générale parallélépipédique. Elle est dirigée vers l'extrémité libre 16B du bras et décalée par rapport à cette extrémité libre 16B parallèlement à l'axe d'articulation X' du bras.

La saillie radiale 72 est suffisamment écartée de l'axe Y' du bras pour permettre le passage de la tête 40 entre cette saillie 72 et le bras 16 de manière à venir au contact du contour 24 du moyeu.

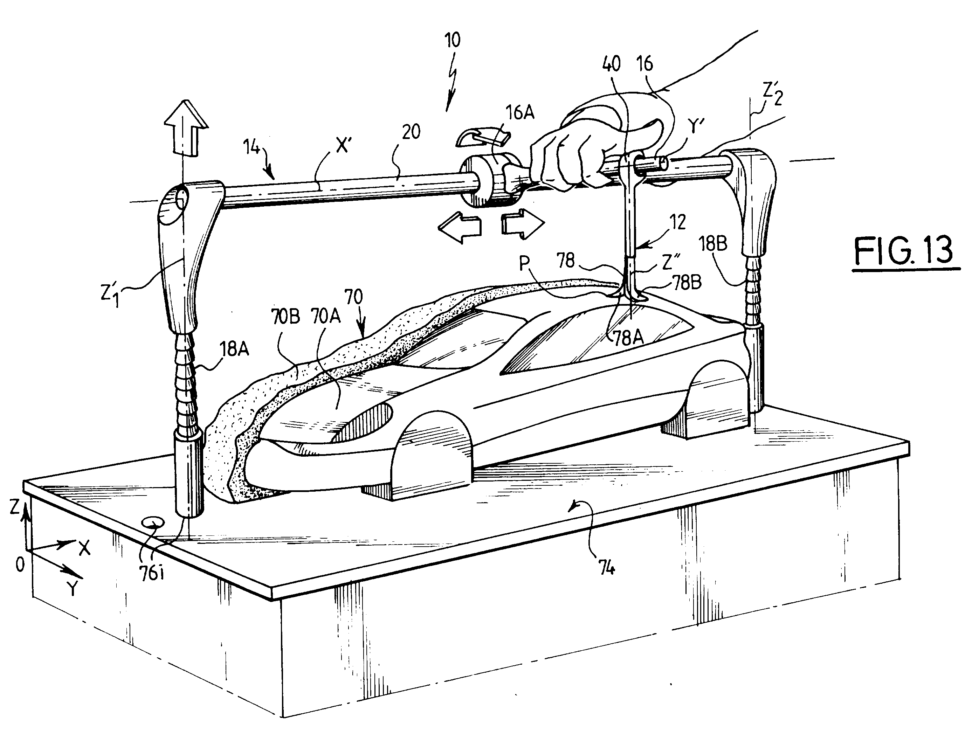

On a représenté sur la figure 13 un dispositif 10, selon un second mode de réalisation de l'invention.

Sur cette figure, les éléments analogues à ceux des figures précédentes sont désignés par des références identiques.

Ce second mode de réalisation est particulièrement bien adapté pour le repérage de points du contour d'un objet 70 tel qu'une maquette de véhicule automobile réalisée à l'échelle 1/5.

Dans ce cas, le support 14 comporte deux montants verticaux 18A,18B, d'axes Z'₁,Z'₂ parallèles à l'axe des cotes Z.

Les montants 18A,18B sont réglables en hauteur à l'aide de moyens classiques.

Les extrémités supérieures des montants 18A,18B portent la traverse 20 horizontale d'axe X'.

Les montants 18A,18B sont portés par une table 74 qui sert également de support pour l'objet 70.

L'extrémité inférieure d'au moins un montant 18A,18B est emboîtée dans l'un des orifices d'une série d'orifices 76i ménagés dans la table 74. Ces orifices 76i sont alignés parallèlement à l'axe des abscisses X de manière à permettre le réglage de l'écartement des montants 18A,18B.

L'extrémité de liaison 16A du bras est montée, d'une part, pivotante sur la traverse 20 entre les deux positions symétriques du bras 16, et d'autre part, déplaçable le long de cette traverse 20.

L'organe de repérage 12 illustré sur la figure 13 comprend une extrémité en forme générale d'ancre 78 munie de deux branches 78A,78B symétriques sensiblement parallèles à un plan perpendiculaire à l'axe des abscisses X.

Cet organe de repérage 12 est déplacé, entre ses deux positions symétriques par rapport à l'axe Y' et le long du bras 16, à l'aide, par exemple, de moyens d'indexation tels que ceux illustrés sur les figures 11 et 12.

De même, le bras 16 est déplacé entre ses deux positions symétriques par rapport à l'axe X' et le long de la traverse 20 à l'aide de moyens d'indexation, par exemple, analogues à ceux de l'organe de repérage illustrés sur les figures 11 et 12.

Comme pour le premier mode de l'invention, le support 14 est positionné de manière que l'axe X' d'articulation du bras 16 soit contenu dans le plan de symétrie de l'objet 70.

L'écartement et la hauteur des montants 18A,18B est réglée en fonction des dimensions de l'objet 70.

Sur la figure 13, on a représenté une branche 78A de l'organe de repérage 12 au contact d'un point P de la première moitié 70A de l'objet.

Pour déterminer le point symétrique de ce point P, situé dans la seconde moitié 70B de l'objet, on procède de façon analogue à ce qui a été décrit dans le cas du premier mode de réalisation de l'invention.

L'invention ne se limite pas aux modes de réalisation illustrés sur les figures.

En particulier, l'organe de repérage d'un point peut avoir des formes variées, sans sortir du cadre de l'invention.

Ainsi, un organe de repérage ayant pour plan de symétrie un plan contenant les axes du bras et d'articulation de ce bras peut avoir une forme générale en pioche ou en disque.

Parmi les avantages de l'invention, on notera les suivants.

Le dispositif selon l'invention est très bien adapté au repérage de point d'un objet comportant un plan de symétrie, ceci en permettant la détermination précise et rapide d'un point de l'objet à partir d'un autre point qui lui est symétrique.

La précision et la rapidité résultent notamment du fait que les deux positions symétriques du bras 16 sont établies par des moyens à appui ou à indexation permettant une libre rotation de ce bras 16 autour de l'axe d'articulation X' entre ses deux positions symétriques.

La précision et la rapidité résultent également du fait que, lorsque l'organe de repérage 12 est monté rotatif autour du bras 16, les deux positions symétriques de cet organe 12 de repérage sont établies par des moyens à appui ou à indexation permettant une libre rotation de l'organe de repérage 12 autour de l'axe Y' entre ses deux positions symétriques.

## Revendications

1. Dispositif de repérage d'un point (P,P') par rapport à un repère cartésien de référence défini par un axe horizontal d'abscisses (X), un axe horizontal d'ordonnées (Y) et un axe vertical de cotes (Z), le dispositif étant du type comprenant un organe (12) de repérage du point (P,P') relié à un support (14) de positionnement en abscisse et cote de cet organe de repérage (12), **caractérisé en ce que** l'organe de repérage (12) est porté par un bras rectiligne (16) de positionnement en ordonnée de cet organe de repérage (12), ce bras étant muni d'une extrémité de liaison (16A) montée pivotante sur le support (14) autour d'un axe d'articulation (X') parallèle à celui des abscisses, entre deux positions symétriques par rapport à cet axe d'articulation (X') dans lesquelles l'axe (Y') du bras (16) est parallèle à l'axe (Y) des ordonnées.

2. Dispositif selon la revendication 1, caractérisé en ce que les deux positions symétriques du bras (16) sont établies par des moyens à appui (30 à 36) ou à indexation permettant une libre rotation du bras (16) autour de l'axe d'articulation (X') entre ses positions symétriques.

3. Dispositif selon la revendication 2, caractérisé en ce que le support (14) comporte deux montants verticaux (18A,18B) réglables en hauteur, d'axes (Z'₁,Z'₂) parallèles à l'axe des cotes (Z), l'extrémité supérieure des montants (18A,18B) portant une traverse (20) horizontale ayant pour axe l'axe d'articulation (X'), l'extrémité de liaison (16A) du bras étant montée, d'une part, pivotante sur la traverse (20) entre les deux positions symétriques du bras (16), et d'autre part, déplaçable le long de cette traverse (20).

4. Dispositif selon la revendication 3, caractérisé en ce que les montants (18A,18B) sont portés par une table (74), l'extrémité inférieure d'au moins un montant (18A,18B) étant emboîtée dans l'un des orifices d'une série d'orifices (76i) ménagés dans la table (74) et alignés parallèlement à l'axe des abscisses (X), de manière à permettre le réglage de l'écartement des montants (18A,18B).

5. Dispositif selon l'une quelconque des revendications 2 à 4, caractérisé en ce que les deux positions symétriques du bras (16) sont établies par deux faces horizontales (30,32) formant des butées fixes portées par le support (14), symétriques par rapport à un plan vertical contenant l'axe d'articulation (X') du bras, coopérant respectivement avec deux faces (34,36) complémentaires formant des butées mobiles portées par le bras (16), symétriques par rapport à un plan contenant les axes du bras (Y') et d'articulation (X') de ce bras, les butées mobiles (34,36) prenant appui par gravité sur les butées fixes (30,32) qui s'étendent sous un plan horizontal contenant l'axe (X') d'articulation du bras.

6. Dispositif selon la revendication 5, caractérisé en ce que l'extrémité de liaison (16A) du bras forme un moyeu de contour circulaire (24) centré sur l'axe d'articulation (X') du bras et partiellement logé dans un berceau (26) de contour complémentaire (28), porté par le support (14), les extrémités du berceau (26) formant les butées fixes (30,32) de positionnement du bras.

7. Dispositif selon la revendication 6, caractérisé en ce que les butées mobiles (34,36) de positionnement du bras forment des faces d'une partie (38) du bras (16) intermédiaire entre l'extrémité de liaison (16A) et le reste du bras.

8. Dispositif selon la revendication 6, caractérisé en ce que les butées mobiles (34,36) de positionnement du bras forment des faces d'une saillie radiale (72) du moyeu, dirigée vers l'extrémité libre (16B) du bras et décalée par rapport à cette extrémité libre (16B) parallèlement à l'axe d'articulation (X') du bras.

9. Dispositif selon l'une quelconque des revendications précédentes, caractérisé en ce que le centre de gravité du bras (16) est situé plus près de son extrémité de liaison (16A) que de son extrémité libre (16B).

10. Dispositif selon l'une quelconque des revendications précédentes, caractérisé en ce que l'organe de repérage (12) est porté par une tête (40) montée déplaçable sur le bras (16) parallèlement à l'axe (Y') de ce bras.

11. Dispositif selon la revendication 10, caractérisé en ce que la tête (40), de préférence amovible, forme un élément creux femelle, tel qu'un manchon ou une bague, qui est coaxial au bras (16) et qui est monté coulissant sur ce bras formant un élément mâle.

12. Dispositif selon l'une quelconque des revendications 1 à 11, caractérisé en ce que l'organe de repérage (12) a pour plan de symétrie un plan contenant les axes du bras (Y') et d'articulation (X') de ce bras.

13. Dispositif selon l'une quelconque des revendications 1 à 11, caractérisé en ce que l'organe de repérage (12) forme un doigt dissymétrique par rapport à l'axe (Y') du bras, s'étendant perpendiculairement à ce bras, ce doigt (12) étant monté pivotant sur le bras (16) autour de l'axe (Y') de ce dernier, entre deux positions symétriques par rapport à l'axe (Y') du bras.

14. Dispositif selon les revendications 10 et 13 prises ensemble, caractérisé en ce que la tête (40) est montée rotative autour du bras (16).

15. Dispositif selon la revendication 14, caractérisé en ce que les deux positions symétriques de l'organe de repérage (12) sont établies par des moyens à appui (52,54,58,60) ou à indexation (42 à 46;42i;44i) permettant une libre rotation de l'organe de repérage (12) autour de l'axe (Y') du bras (16) entre les deux positions symétriques de cet organe (12).

16. Dispositif selon les revendications 11 et 15 prises ensemble, caractérisé en ce que les deux positions symétriques de l'organe de repérage (12) sont établies par des moyens d'indexation, ménagés sur les surfaces en regard du bras (16) et de la tête (40), comprenant deux encoches (42,44) diamétralement opposées ménagées dans le bras (16) et un ergot (46) ménagé dans la tête (40) destiné à s'emboîter alternativement dans l'une ou l'autre des encoches (42,44), un manchon intermédiaire (48) déformable radialement élastiquement, par exemple en caoutchouc, étant interposé entre les surfaces en regard du bras (16) et de la tête (40) afin de permettre des déplacements radiaux relatifs du bras (16) et de la tête (40) pour le déboîtement et l'emboîtement de l'ergot (46) dans les encoches (42,44).

17. Dispositif selon la revendication 16, caractérisé en ce que les moyens d'indexation comprennent au moins deux séries d'encoches (42i,44i) diamétralement opposées ménagées dans le bras (16), les encoches d'une même série étant alignées parallèlement à l'axe (y') du bras et étant destinées à coopérer avec l'ergot (46) de la tête pour positionner l'organe de repérage (12) en ordonnée.

18. Dispositif selon la revendication 15, caractérisé en ce qu'il comprend un secteur fixe (50) en quart de disque solidaire du bras (16) destiné à coopérer avec un secteur mobile (56) en quart de disque, solidaire de l'organe de repérage (12), ce secteur étant délimité par des bords radiaux (52,54,58,60) concourant vers l'axe (Y') du bras, et en ce que les deux positions symétriques de l'organe de repérage (12) sont établies respectivement par mise en appui de deux premiers (52,58) et deux seconds (54,60) bords complémentaires des secteurs fixe (50) et mobile (56), les bords radiaux complémentaires en appui l'un contre l'autre étant immobilisés entre eux par des moyens complémentaires à encoches (62, 64) et ergots (66,68) ménagés dans ces bords.

19. Dispositif selon l'une quelconque des revendications 13 à 18, caractérisé en ce que l'organe de repérage (12) comprend une extrémité coudée (12E) en forme générale de crochet ayant pour plan de symétrie un plan perpendiculaire à l'axe (Y') du bras (16), cette extrémité (12E) de l'organe de repérage étant montée pivotante sur le reste de cet organe autour d'un axe (Z'') perpendiculaire à l'axe (Y') du bras entre deux positions symétriques par rapport au plan contenant l'axe (Y') du bras et l'axe (Z'') d'articulation de l'extrémité coudée (12E) de l'organe de repérage.

20. Dispositif selon l'une quelconque des revendications 13 à 18, caractérisé en ce que l'organe de repérage (12) comprend une extrémité en forme générale d'ancre (78) munie de branches (78A,78B) symétriques sensiblement parallèles à un plan perpendiculaire à l'axe des abscisses (X).

21. Utilisation d'un dispositif selon l'une quelconque des revendications précédentes pour le repérage de points d'un objet (70) symétrique par rapport à un plan vertical parallèle aux axes des abscisses (X) et des cotes (Z).

## Patentansprüche

1. Vorrichtung zur Ortsbestimmung eines Punktes (P, P') in Bezug auf eine kartesische Referenzmarkierung, die durch eine horizontale Abszissenachse (X), eine horizontale Ordinatenachse (Y) und eine vertikale Höhenachse (Z) definiert ist, wobei die Vorrichtung von einer Art ist, welche eine Einrichtung (12) zur Ortsbestimmung des Punktes (P, P') aufweist, die mit einem Träger (14) zur Positionierung dieser Ortsbestimmungseinrichtung (12) in Abszisse und Höhe verbunden ist, **dadurch gekennzeichnet, daß** die Ortsbestimmungseinrichtung (12) auf einem geraden Arm (16) zur Positionierung der Ortsbestimmungseinrichtung (12) in der Ordinate sitzt, wobei dieser Arm mit einem Anschlußende (16A) versehen ist, welches um eine zur Abszissenachse parallele Drehachse (X') zwischen zwei in Bezug auf diese Drehachse (X') symmetrischen Stellungen, in welchen die Achse (Y') des Arms (16) zur Ordinatenachse (Y) parallel ist, schwenkbar am Träger (14) angebracht ist.

2. Vorrichtung nach Anspruch 1, daduch gekennzeichnet, daß die beiden symmetrischen Stellungen des Arms (16) durch Anlagemittel (30 bis 36) oder Indexiermittel bestimmt sind, die eine freie Drehung des Arms (16) um die Drehachse (X') zwischen seinen symmetrischen Stellungen gestatten.

3. Vorrichtung nach Anspruch 2, dadurch gekennzeichnet, daß der Träger (14) zwei höhenverstellbare vertikale Stützen (18A, 18B) mit zur Höhenachse (Z) parallelen Achsen (Z'₁, Z'₂) aufweist, wobei das obere Ende der Stützen (18A, 18B) einen horizontalen Querträger (20) trägt, der als Achse die Drehachse (X') hat, wobei das Anschlußende (16A) des Arms einerseits zwischen den beiden symmetrischen Stellungen des Arms (16) am Querträger (20) schwenkbar und andererseits längs dieses Querträgers (20) verschiebbar angebracht ist.

4. Vorrichtung nach Anspruch 3, dadurch gekennzeichnet, daß die Stützen (18A, 18B) auf einem Tisch (74) sitzen, wobei das untere Ende wenigstens einer Stütze (18A, 18B) in einer der Öffnungen einer Folge von Öffnungen (76i) eingefügt ist, die in dem Tisch (74) ausgebildet und parallel zur Abszissenachse (X) aufgereiht sind, derart, daß eine Verstellung des Abstandes der Stützen (18A, 18B) möglich ist.

5. Vorrichtung nach irgendeinem der Ansprüche 2 bis 4, dadurch gekennzeichnet, daß die beiden symmetrischen Stellungen des Arms (16) durch zwei horizontale Flächen (30, 32) bestimmt sind, die auf dem Träger (14) sitzende feste Anschläge bilden und symmetrisch in Bezug auf eine die Drehachse (X') des Arms enthaltende vertikale Ebene sind und mit zwei komplementären Flächen (34, 36) zusammenwirken, die auf dem Arm (16) sitzende bewegliche Anschläge bilden und symmetrisch in Bezug auf eine die Achse des Arms (Y') und die Drehachse (X') dieses Arms enthaltende Ebene sind, wobei die beweglichen Anschläge (34, 36) durch Schwerkraft an den festen Anschlägen (30, 32) zur Anlage kommen, die sich unter einer die Drehachse (X') des Arms enthaltenden horizontalen Ebene erstrecken.

6. Vorrichtung nach Anspruch 5, dadurch gekennzeichnet, daß das Anschlußende (16A) des Arms eine Nabe mit kreisförmigem Umriß (24) bildet, die auf die Drehachse (X') des Arms zentriert ist und teilweise in einer Wiege (26) mit komplementärer Kontur (28) aufgenommen ist, die auf dem Träger (14) sitzt, wobei die Enden der Wiege (26) die festen Anschläge (30, 32) zur Positionierung des Arms bilden.

7. Vorrichtung nach Anspruch 6, dadurch gekennzeichnet, daß die beweglichen Anschläge (34, 36) zur Positionierung des Arms Flächen eines Teils (38) des Arms (16) bilden, der zwischen dem Anschlußende (16A) und dem Rest des Arms liegt.

8. Vorrichtung nach Anspruch 6, dadurch gekennzeichnet, daß die beweglichen Anschläge (34, 36) zur Positionierung des Arms Flächen eines radialen Vorsprungs (72) der Nabe bilden, der zum freien Ende (16B) des Arms gerichtet ist und in Bezug auf dieses freie Ende (16B) parallel zur Drehachse (X') des Arms versetzt ist.

9. Vorrichtung nach irgendeinem der vorstehenden Ansprüche, dadurch gekennzeichnet, daß der Schwerpunkt des Arms (16) näher zu seinem Anschlußende (16A) als zu seinem freien Ende (16B) liegt.

10. Vorrichtung nach irgendeinem der vorstehenden Ansprüche, dadurch gekennzeichnet, daß die Ortsbestimmungseinrichtung (12) von einem Kopf (40) getragen wird, der am Arm (16) parallel zur Achse (Y') dieses Arms versetzbar angebracht ist.

11. Vorrichtung nach Anspruch 10, dadurch gekennzeichnet, daß der, bevorzugt abnehmbare, Kopf (40) ein hohles Mutterteilelement, wie eine Muffe oder einen Ring, bildet, das koaxial zum Arm (16) ist und gleitend auf dem ein Vaterteilelement bildenden Arm angebracht ist.

12. Vorrichtung nach irgendeinem der Ansprüche 1 bis 11, dadurch gekennzeichnet, daß die Ortsbestimmungseinrichtung (12) als Symmetrieebene eine Ebene hat, die die Achse des Arms (Y') und die Drehachse (X') dieses Arms enthält.

13. Vorrichtung nach irgendeinem der Ansprüche 1 bis 11, dadurch gekennzeichnet, daß die Ortsbestimmungseinrichtung (12) einen in Bezug auf die Achse (Y') des Arms asymmetrischen Finger bildet, der sich senkrecht zu diesem Arm erstreckt, wobei der Finger (12) zwischen zwei in Bezug auf die Achse (Y') des Arms (16) symmetrischen Stellungen um die Achse (Y') desselben schwenkbar an diesem angebracht ist.

14. Vorrichtung nach den Ansprüchen 10 und 13 zusammengenommen, dadurch gekennzeichnet, daß der Kopf (40) um den Arm (16) drehbar angebracht ist.

15. Vorrichtung nach Anspruch 14, dadurch gekennzeichnet, daß die beiden symmetrischen Stellungen der Ortsbestimmungseinrichtung (12) durch Anlagemittel (52, 54, 58, 60) oder Indexiermittel (42 bis 46, 42i; 44i) bestimmt sind, die eine freie Drehung der Ortsbestimmungseinrichtung (12) um die Achse (Y') des Arms (16) zwischen den beiden symmetrischen Stellungen dieser Einrichtung (12) gestatten.

16. Vorrichtung nach den Ansprüchen 11 und 15 zusammengenommen, dadurch gekennzeichnet, daß die beiden symmetrischen Stellungen der Ortsbestimmungseinrichtung (12) durch Indexiermittel bestimmt sind, die an den gegenüberliegenden Oberflächen des Arms (16) und des Kopfes (40) ausgebildet sind, wobei sie zwei im Arm (16) ausgebildete diametral gegenüberliegende Rasten (42, 44) und eine im Kopf (40) ausgebildete Nase (46), die für ein abwechselndes Einlegen in die eine oder andere der Rasten (42, 44) bestimmt ist, aufweisen, wobei eine radial elastisch verformbare Zwischenmuffe (48), beispielsweise aus Gummi, zwischen den gegenüberliegenden Flächen des Arms (16) und des Kopfes (40) zwischenlegt ist, damit radiale Relativversetzungen des Arms (16) und des Kopfs (40) für das Lösen von und das Einlegen der Nase (46) in die Rasten (42, 44) möglich ist.

17. Vorrichtung nach Anspruch 16, dadurch gekennzeichnet, daß die Indexiermittel wenigstens zwei diametral gegenüberliegend im Arm (16) ausgebildete Folgen von Rasten (42i, 44i) aufweisen, wobei die Rasten ein und derselben Folge parallel zur Achse (Y') des Arms aufgereiht sind und für ein Zusammenwirken mit der Nase (46) des Kopfs bestimmt sind, um so die Ortsbestimmungseinrichtung (12) in der Ordinate zu positionieren.

18. Vorrichtung nach Anspruch 15, daduch gekennzeichnet, daß sie einen feststehenden Sektor (50) als mit dem Arm (16) festverbundene Viertelscheibe aufweist, der für ein Zusammenwirken mit einem beweglichen Sektor (56) als mit der Ortsbestimmungseinrichtung (12) festverbundener Viertelscheibe bestimmt ist, wobei dieser Sektor durch zwei radiale Ränder (52, 54, 58, 60) begrenzt ist, die zur Achse (Y') des Arms zusammenlaufen, und daß die beiden symmetrischen Stellungen der Ortsbestimmungseinrichtung (12) durch das gegenseitige Anlegen von drei ersten (52, 58) und zwei zweiten (54, 60) komplementären Rändern des feststehenden Sektors (50) und des beweglichen Sektors (56) bestimmt sind, wobei die beiden gegeneinander anliegenden komplementären radialen Ränder durch komplementäre Mittel mit Rasten (62, 64) und Nasen (66, 68), die in diesen Rändern ausgebildet sind, gegeneinander festgelegt sind.

19. Vorrichtung nach irgendeinem der Ansprüche 13 bis 18, dadurch gekennzeichnet, daß die Ortsbestimmungseinrichtung (12) ein abgewinkeltes Ende (12E) mit allgemeiner Hakenform, die als Symmetrieebene ein zur Achse (Y') des Arms (16) senkrechte Ebene hat, aufweist, wobei dieses Ende (12E) der Ortsbestimmungseinrichtung am Rest dieser Einrichtung um eine zur Achse (Y') des Arms senkrechte Achse (Z'') zwischen zwei in Bezug auf die Ebene, die die Achse (Y') des Arms und die Drehachse (Z'') des abgewinkelten Endes (12E) der Ortsbestimmungseinrichtung enthält, symmetrischen Stellungen schwenkbar angebracht ist.

20. Vorrichtung nach irgendeinem der Ansprüche 13 bis 18, dadurch gekennzeichnet, daß die Ortsbestimmungseinrichtung (12) ein Ende in allgemeiner Ankerform (78) aufweist, das mit symmetrischen Schenkeln (78A, 78B) versehen ist, die im wesentlichen zur einer zur Abszissenachse (X) senkrechten Ebene parallel sind.

21. Verwendung einer Vorrichtung nach irgendeinem der vorstehenden Ansprüche für die Ortsbestimmung von Punkten eines Objekts (70), das symmetrisch in Bezug auf eine vertikale Ebene ist, die zur Abszissenachse (X) und Höhenachse (Z) parallel ist.

## Claims

1. Apparatus for locating a point (P, P') relative to a Cartesian system of reference coordinates defined by a horizontal x-coordinate axis (X), a horizontal y-coordinate axis (Y) and a vertical z-coordinate axis (Z), the apparatus being of the type comprising a member (12) for locating the point (P, P') connected to a support (14) for positioning the x-coordinates and z-coordinates of this locating member (12), characterised in that the locating member (12) is carried by a straight arm (16) for positioning the y-coordinates of this locating member (12), this arm being provided with a connecting end (16A) mounted on the support (14) so as to be pivotable about an articulation axis (X') parallel to the x-coordinate axis between two positions which are symmetrical with respect to this articulation axis (X') wherein the axis (Y') of the arm (16) is parallel to the y-coordinate axis (Y).

2. Apparatus according to claim 1, characterised in that the two symmetrical positions of the arm (16) are determined by abutment means (30 to 36) or indexing means allowing the arm (16) to rotate freely about the articulation axis (X') between its symmetrical positions.

3. Apparatus according to claim 2, characterised in that the support (14) comprises two vertical uprights (18A, 18B) adjustable in height, their axes (Z'₁, Z'₂) being parallel to the z-coordinate axis (z), the top end of the uprights (18A, 18B) bearing a horizontal crosspiece (20) whose axis is the articulation axis (X'), the connecting end (16A) of the arm being mounted so as to be, on the one hand, pivotable on the crosspiece (20) between the two symmetrical positions of the arm (16), and, on the other hand, movable along this crosspiece (20) .

4. Apparatus according to claim 3, characterised in that the uprights (18A, 18B) are supported by a bench (74), the bottom end of at least one upright (18A, 18B) fitting into one of the orifices of a series of orifices (76i) provided in the bench (74) and aligned parallel to the x-coordinate axis (x), so as to allow the spacing of the uprights (18A, 18B) to be adjusted.

5. Apparatus according to any one of claims 2 to 4, characterised in that the two symmetrical positions of the arm (16) are determined by two horizontal faces (30, 32) forming fixed abutments carried by the support (14) which are symmetrical with respect to a vertical plane containing the articulation axis (X') of the arm, cooperating respectively with two complementary faces (34, 36) forming movable abutments carried by the arm (16), which are symmetrical with respect to a plane containing the axis of the arm (Y') and the articulation axis (X') of this arm, these movable abutments (34, 36) bearing by gravity on the fixed abutments (30, 32) which extend under a horizontal plane containing the articulation axis (X') of the arm.

6. Apparatus according to claim 5, characterised in that the connecting end (16A) of the arm forms a hub (24) of circular contour centred on the articulation axis (X') of the arm and partially accommodated in a cradle (26) of complementary contour (28), carried by the support (14), the ends of the cradle (26) forming the fixed abutments (30, 32) for positioning the arm.

7. Apparatus according to claim 6, characterised in that the movable abutments (34, 36) for positioning the arm form the faces of a part (38) of the arm (16) located between the connecting end (16A) and the rest of the arm.

8. Apparatus according to claim 6, characterised in that the movable abutments (34, 36) for positioning the arm form the faces of a radial projection (72) of the hub, directed towards the free end (16B) of the arm and offset relative to this free end (16B) parallel to the articulation axis (X') of the arm.

9. Apparatus according to any one of the preceding claims, characterised in that the centre of gravity of the arm (16) is located closer to its connecting end (16A) than to its free end (16B).

10. Apparatus according to any one of the preceding claims, characterised in that the locating member (12) is carried by a head (40) displaceably mounted on the arm (16) parallel to the axis (Y') of this arm.

11. Apparatus according to claim 10, characterised in that the head (40), which is preferably removable, forms a hollow female element such as a sleeve or a ring which is coaxial with the arm (16) and is slidably mounted on this arm forming a male element.

12. Apparatus according to any one of claims 1 to 11, characterised in that the locating member (12) has, as its plane of symmetry, a plane containing the axis (Y') of the arm and the articulation axis (X') of this arm.

13. Apparatus according to any one of claims 1 to 11, characterised in that the locating member (12) forms an asymmetrical finger relative to the axis (Y') of the arm, extending perpendicularly to this arm, this finger (12) being mounted on the arm (16), so as to be pivotable about the axis (Y') thereof, between two positions which are symmetrical relative to the axis (Y') of the arm.

14. Apparatus according to claims 10 and 13 taken together, characterised in that the head (40) is rotatably mounted about the arm (16).

15. Apparatus according to claim 14, characterised in that the two symmetrical positions of the locating member (12) are determined by abutment means (52, 54, 58, 60) or indexing means (42 to 46;42i;44i) allowing free rotation of the locating member (12) about the axis (Y') of the arm (16) between the two symmetrical positions of this member (12).

16. Apparatus according to claims 11 and 15 taken together, characterised in that the two symmetrical positions of the locating member (12) are determined by indexing means provided on the facing surfaces of the arm (16) and head (40), comprising two diametrically opposed slots (42, 44) formed in the arm (16) and a lug (46) provided in the head (40) intended to engage alternately in one or other of the slots (42, 44), an intermediate sleeve (48) which is elastically deformable in the radial direction, e.g. made of rubber, being interposed between the facing surfaces of the arm (16) and head (40) in order to allow the relative radial movements of the arm (16) and head (40) so that the lug (46) can disengage from and engage in the slots (42, 44).

17. Apparatus according to claim 16, characterised in that the indexing means comprise at least two sets of diametrically opposed slots (42i,44i) formed in the arm (16), the slots of one set being aligned parallel to the axis (y') of the arm and being adapted to cooperate with the lug (46) on the head for positioning the y-coordinate of the locating member (12).

18. Apparatus according to claim 15, characterised in that it comprises a fixed sector (50) in the form of a quarter-disc which is integral with the arm (16), intended to cooperate with a movable sector (56) in the form of a quarter-disc which is integral with the locating member (12), this sector being delimited by radial edges (52, 54,58,60) converging on the axis (Y') of the arm, and in that the two symmetrical positions of the locating member (12) are established, respectively, by bringing together two first (52, 58) and two second (54, 60) complementary edges of the fixed (50) and mobile (56) sectors, the complementary radial edges bearing on one another being fixed together by complementary means comprising slots (62, 64) and lugs (66,68) provided in these edges.

19. Apparatus according to any one of claims 13 to 18, characterised in that the locating member (12) comprises a bent end (12E) generally in the shape of a hook having, as its plane of symmetry, a plane perpendicular to the axis (Y') of the arm (16), this end (12E) of the locating member being mounted on the rest of this member so as to be pivotable about an axis (Z'') perpendicular to the axis (Y') of the arm between two positions which are symmetrical with respect to the plane containing the axis (Y') of the arm and the articulation axis (Z'') of the bent end (12E) of the locating member.

20. Apparatus according to any one of claims 13 to 18, characterised in that the locating member (12) comprises a generally anchor-shaped end (78) provided with symmetrical branches (78A,78B) substantially parallel to a plane perpendicular to the x-coordinate axis (X).

21. Use of an apparatus according to any one of the preceding claims for locating points on an object (70) which is symmetrical with respect to a vertical plane parallel to the x-coordinate axis (X) and z-coordinate axis (Z).
